# EUROPEAN PATENT SPECIFICATION

(11) **EP 2 085 307 B1**
(45) Date of publication and mention of the grant of the patent: **07.05.2014**
(21) Application number: 08172268.8
(22) Date of filing: 19.12.2008
(51) Int. Cl.: B62K 21/18, B62D 5/00

(54) **Motorcycle steering system**
Motorradslenkungssystem
Système de direction d'une motocyclette

(30) Priority: 31.01.2008 JP 2008021575
(43) Date of publication of application: 05.08.2009
(73) Proprietor: Honda Motor Co., Ltd., Minato-ku Tokyo 107-8556 (JP)
(72) Inventor: Hikichi, Toichiro, Saitama 351-0193 (JP); Kiyota, Satoru, Saitama 351-0193 (JP); Tagami, Takuya, Saitama 351-0193 (JP); Araki, Makoto, Saitama 351-0193 (JP)
(74) Representative: Quinterno, Giuseppe

(56) References cited:
- JP-A- 2004 090 716

## Description

The present invention relates to a motorcycle steering system, and more specifically to a motorcycle steering system intended to dispose a steering mechanism efficiently.

Conventionally, there is known a construction of a motorcycle steering system wherein a mechanism for improving the maneuverability of a handlebar is incorporated into a head pipe portion supporting the steering system at the front end of a vehicle body.

JP-A 2004-90716 discloses a steering system wherein a magnetic steering damper requiring no hydraulic fluid is incorporated into the steering system in such a manner that the steering damper surrounds the steering system.

As a mechanism for improving the maneuverability of a handlebar, a variable ratio steering mechanism and a power assist mechanism are known, for example. However, since these mechanisms tend to become more complicated in structure and occupy larger space to install than the steering damper as described above, it was necessary to devise an installing method different from that disclosed in the above-mentioned prior document.

An object of the present invention is to address the above-mentioned problem with the prior art and provide a motorcycle steering system adapted to dispose a steering mechanism efficiently.

To achieve the above-mentioned object, according to one aspect of the present invention, there is provided a motorcycle steering system for a motorcycle having a front wheel and a rear wheel comprising an electrically driven steering conversion mechanism for converting a rotary input to an input shaft into an amount of rotation and/or a turning force and outputting them/it from an output shaft; a steering handlebar coupled to the input shaft; a support portion coupled to the output shaft and supporting the front wheel of the motorcycle; and a housing accommodating the steering conversion mechanism, wherein the steering conversion mechanism is mounted at the front end of a body frame of the motorcycle integrally therewith by means of the housing.

Furthermore, according to a second aspect of the invention, the steering conversion mechanism includes an electric motor as each driving source.

Moreover, according to a third aspect of the invention, the steering conversion mechanism includes at least one of a variable ratio steering mechanism for converting an input steering angle to an input shaft caused by the steering handlebar into an output steering angle and transmitting it to the front wheel, and a power assist mechanism for supplying a supplementary power to an input operation to the steering handlebar.

Still further, according to a fourth aspect of the invention, the housing is made of the same material as that of the motorcycle body frame.

With the first aspect, since the housing accommodating the steering conversion mechanism is mounted at the front end of the motorcycle body frame integrally therewith, it is possible to use the housing as part of the body frame and thereby to materialize a steering system that allows a portion around the head pipe to be compact and highly rigid. Also, in assembling a motorcycle, since the housing accommodating the steering conversion mechanism is assembled in advance and then mounted to the motorcycle body frame to complete the assembly, workability in motorcycle assembly can be increased as compared with the method of installing a complicated mechanism onto the motorcycle body later. This also makes it easy to share one type of steering system among a plurality of motorcycle models whose body frames are different in shape and the like. Further, if the housing and the body frame are fixed together with bolts or the like, it is possible to remove the steering system easily from the body frame during an overhaul or the like. In addition, since the housing is mounted to the body frame and is not turned even when the steering handlebar is steered, it is easy to use the housing as a mounting base for a headlight, a cowling, or the like.

With the first aspect, since the steering conversion mechanism is electrically driven, it is possible to materialize a motorcycle steering system suitable for various electrical controls based on the output information from various sensors.

With the second aspect, since the steering conversion mechanism includes an electric motor as each driving source, the entire steering conversion mechanism including the driving source is accommodated in the housing, thus making it further easy to apply one type of steering system to a plurality of motorcycle models.

With the third aspect, since the steering conversion mechanism includes at least one of the variable ratio steering mechanism for converting an input steering angle to the input shaft caused by the steering handlebar into an output steering angle and transmitting it to the front wheel, and the power assist mechanism for supplying a supplementary power to an input operation to the steering handlebar, the steering mechanisms are concentrated at the front end portion of the motorcycle body frame, thus allowing the steering system to be compact and space-saving.

With the fourth aspect, since the housing is made of the same material as that of the motorcycle body frame, it is easy to fix the housing and the body frame together by welding or the like. Also, if the housing is designed as a rigid member of the motorcycle body frame, it is easy to make a rigidity calculation of the entire motorcycle body frame.

Preferred embodiments of the present invention will be described below with reference to the drawings.
Fig. 1 is a side view of a motorcycle to which a steering system according to one embodiment of the present invention is applied.
Fig. 2 is a partially-enlarged view of Fig. 1.
Fig. 3 is a perspective view of the steering system.
Fig. 4 is a block diagram showing the configuration of the steering system and peripheral equipment thereof.

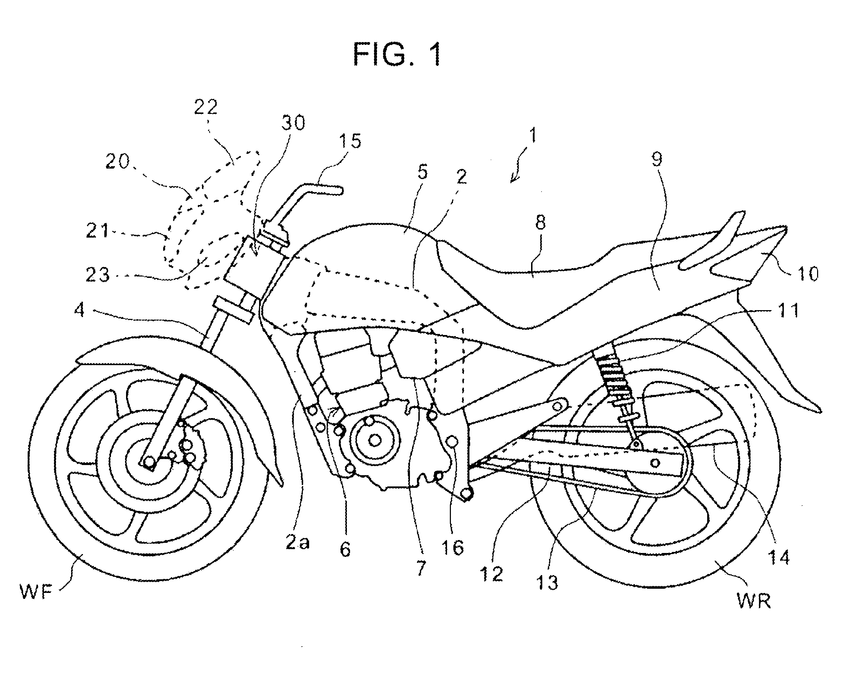

Fig. 1 is a side view of a motorcycle 1 to which a steering system 30 in one embodiment of the present invention is applied. A front wheel WF serving as a steered wheel of the motorcycle 1 is rotatably journaled to the lower end portion of a front fork 4. The front fork 4 is supported below the steering system 30 attached at the front end portion of a motorcycle body frame 2 and above an under frame 2a. At the front side of the steering system 30 including a steering handlebar 15 steered by the rider, a front cowl 20 comprising a wind screen 22, a pair of left and right direction indicator lamps 23, and a headlight unit 21 are mounted.

Below the body frame 2 having the under frame 2a, an air cleaner 7 and an engine 6 are suspended. Combustion gas from the engine 6 is exhausted from a muffler 14 at the rear side of the vehicle. A swing arm 12 rotatably supporting a rear wheel WR is suspended by a rear shock absorber 11 so as to be swingable about a pivot shaft 16, and a rotary drive power from the engine 6 is transmitted to the rear wheel WR by a drive chain 13. A fuel tank 5 is mounted above the engine 6 and a seat 8 and a seat cowl 9 are disposed behind the fuel tank 5. Further, at the rear end portion of the seat cowl 9, a tail lamp unit 10 formed integrally with a brake lamp and the direction indicator lamp is mounted. The steering system according to this embodiment is characterized in that a housing of the steering system 30 is directly mounted to the front end portion of the motorcycle body frame 2.

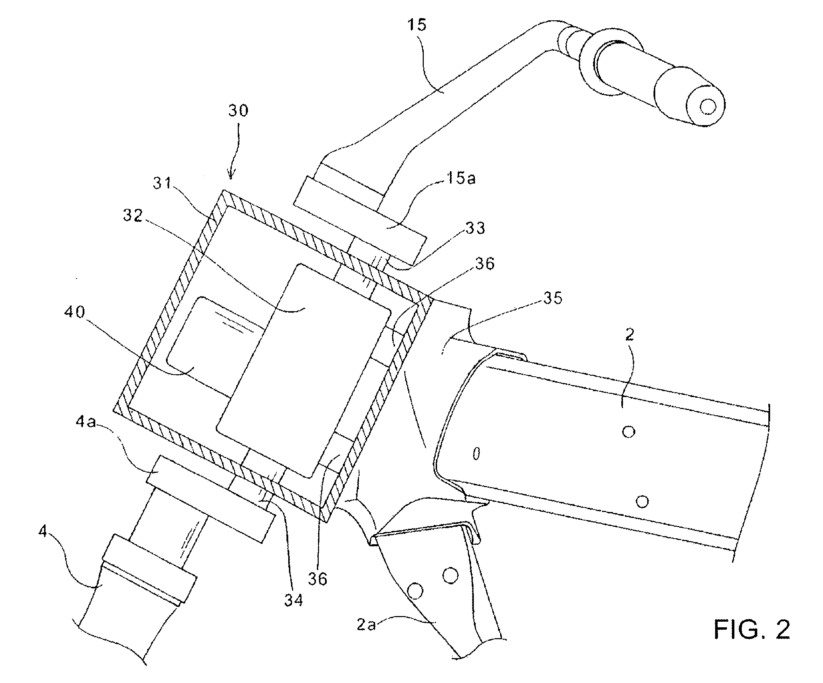

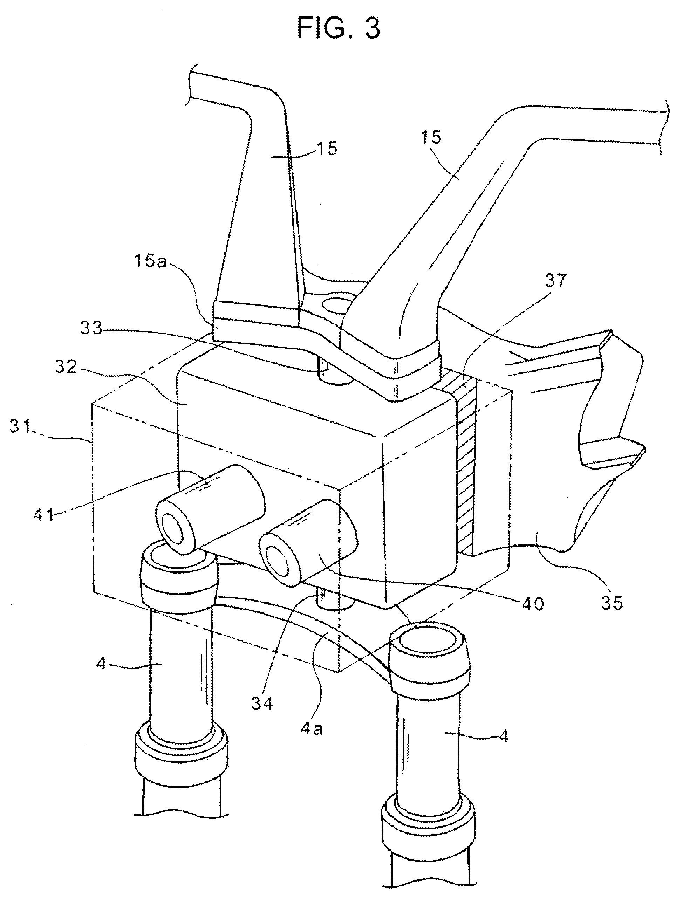

Fig. 2 is a partially enlarged view of Fig. 1. Fig. 3 is a perspective view of the steering system 30. In the steering system 30 according to this embodiment, a steering unit 32 comprising integrally constructed variable ratio steering mechanism and power assist mechanism is accommodated in a housing 31. The housing 31 made of metal or the like is welded to a front portion 37 of a gusset 35 joining together the body frame 2 and the under frame 2a at the front end of the motorcycle body, and thereby the steering system 30 is fixed to the body of the motorcycle 1.

The steering unit 32 serving as a steering conversion mechanism is fixed to an inside wall of the housing 31 by fixing extensions 36. An input shaft 33 is provided at the upside of the motorcycle body of the approximately rectangular steering unit 32. The upper end of the input shaft 33 projects out of the upper portion of the housing 31 and is connected to a support bracket 15a for the steering handlebar 15. Also, an output shaft 34 is provided at the downside of the body of the steering unit 32. The lower end of the output shaft 34 projects out of a lower portion of the housing 31 and is connected to a support bracket 4a as a support section for the front fork 4.

The steering unit 32 has a first motor 40 to drive the power assist mechanism and a second motor 41 to drive the variable ratio steering mechanism. The variable ratio steering mechanism is a mechanism for causing the rotary angle of the input shaft 33 and that of the output shaft 34 to differ from each other at a ratio by a drive power of the first motor 40, that is, causing an input steering angle to the steering handlebar 15 and an output steering angle to the front wheel WF to differ from each other. On the other hand, the power assist mechanism is a mechanism for making it easy to turn the front wheel WF by supplying a supplementary power to the operation force of the rider to be input to the steering handlebar 15 by a drive power of the second motor 41, that is, turning the output shaft 34 with a steering force larger than operation force inputted to the input shaft 33.

As described above, in the steering system 30 according to this embodiment, since the housing 31 accommodating the steering unit 32 is mounted at the front end portion of the motorcycle body frame 2 integrally therewith, it is possible to use the housing 31 as part of the body frame 2 and thereby to materialize the steering system 30 that allows the head pipe to be compact and highly rigid. Although the steering system 30 is mounted to the body frame 2 by welding the housing 31 and the gusset 35 in this embodiment, fixing the housing 31 and the gusset 35 with bolts or the like will allow easy removal of the steering system 30 from the body frame 2 during an overhaul or the like. Further, assembling in advance the steering system 30 having the housing 31 in which the steering unit 32 is accommodated and then mounting the housing 31 to the body frame 2 will complete the motorcycle assembly, it is possible to increase the workability in assembling a motorcycle body and also make the steering system and the motorcycle body compact as compared with the method of installing a complicated mechanism onto the motorcycle body later.

Although the housing 31 is mounted at a front end portion of the gusset 35 in this embodiment, it is possible to form the housing 31 and the gusset 35 integrally and to join a rear end portion of the gusset 35 with the body frame 2. Also, in this embodiment, the housing 31 that is not turned even when the steering handlebar 15 is steered is suitable for a base for mounting a headlight, cowling, and the like. Further, if the housing 31 is welded to the body frame 2, for example, making both parts of the same metal or the like will facilitate the rigidity calculation of the entire body frame when the housing 31 is designed as a rigid member of the body frame. Moreover, if the housing 31 is fixed to the body frame 2 with bolts or the like, it is possible to make each part of a different material.

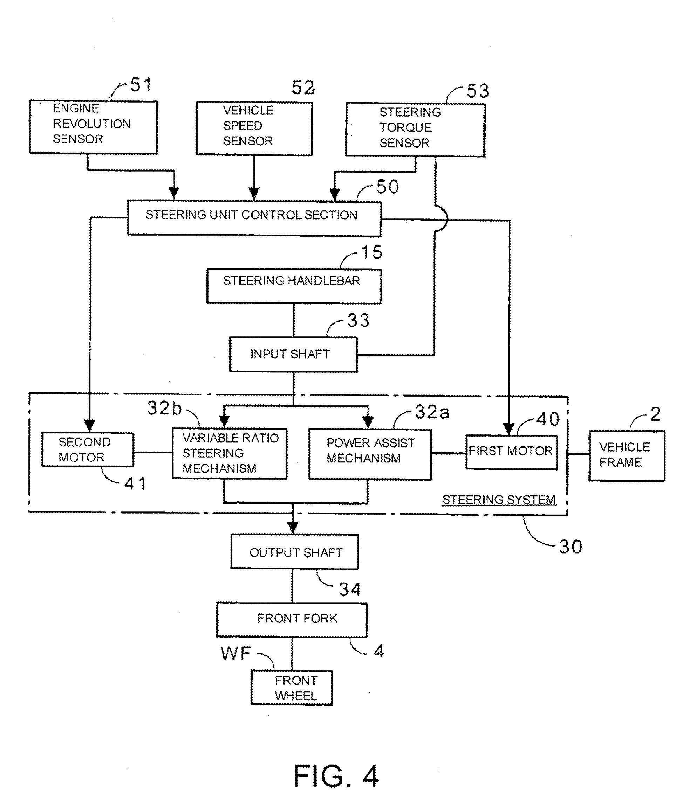

Fig. 4 is a block diagram showing the configuration of the steering system 30 according to this embodiment and peripheral equipment thereof. The same numerals are used to designate the same or equivalent parts. The first motor 40 to drive the power assist mechanism 32a and the second motor 41 to drive the variable ratio steering mechanism 32b are respectively controlled by a steering unit control section 50 to develop a steering ratio and an auxiliary steering force suitable for the front wheel WF, based on the output signals from an engine revolution sensor 51, a motorcycle speed sensor 52, and a steering torque sensor 53 to detect the operation force of the rider inputted to the steering handlebar 15. Also, sensor signals to be input to the steering unit control section 50 may include output signals from a bank angle sensor to detect the angle of inclination of a running motorcycle and a rotary angle sensor to detect the rotary angles of the input shaft and output shaft.

In the steering system 30 according to this embodiment, since the steering system 30 and the body frame 2 are separately and independently configured, it is possible to mount the steering system 30 to the motorcycle by fixing the housing 31 to a front end portion of the body frame 2. This facilitates the sharing of one type of steering system among a plurality of models with different motorcycle body frames and the like. At this time, it is possible to configure the settings of the steering unit 32 that differs with models by changing the input information to the steering unit control section 50. Also, the steering unit 32 has a fail-safe function adapted to enable a normal operation of the handlebar in the event of a malfunction of some kind, by equalizing the amount of rotation of the input shaft 33 and the output shaft 34.

The shape and material of the body frame, under frame, gusset, and housing, the construction and the like of the steering unit and the front fork are not limited to the embodiment described above and can be modified variously. For example, the steering conversion mechanism to be accommodated in the housing may be either one of the variable ratio steering mechanism and the power assist mechanism, and may include a hydraulic steering dumper mechanism or the like. Further, the vehicle body frame of the motorcycle may be of various types such as a twin-spar type made of aluminum or a truss type made of iron pipe. The motorcycle steering system according to the present invention may be applied to a three-wheeled motorcycle and a four-wheeled motorcycle in which a front wheel is steered by a steering handlebar, as well as a motorcycle described above.

### Reference Symbols

- 1: Motorcycle
- 2: Body frame
- 2a: Under frame
- 4: Front fork
- 4a: Support bracket (support section)
- 15: Steering handlebar
- 15a: Support bracket
- 30: Steering system
- 31: Housing
- 32: Steering unit (steering conversion mechanism)
- 32a: Power assist mechanism
- 32b: Variable ratio steering mechanism
- 33: Input shaft
- 34: Output shaft
- 35: Gusset
- 40: First motor
- 41: Second motor
- WF: Front wheel

## Claims

1. A motorcycle steering system (30) for a motorcycle (1) having a front wheel (WF) and a rear wheel (WR), comprising:
an electrically driven steering conversion mechanism (32) adapted to convert a rotary input to an input shaft (33) into an amount of rotation and/or a turning force and output them/it from an output shaft (34);
a steering handlebar (15) coupled to the input shaft (33);
a support portion (4a) coupled to the output shaft (34) and supporting the front wheel (WF) of the motorcycle (1); and
a housing (31) accommodating the steering conversion mechanism (32),
wherein the steering conversion mechanism (32) is mounted to a front end portion of a body frame (2) of the motorcycle (1) integrally therewith by means of the housing (31).

2. The vehicle steering system according to Claim 1, wherein the steering conversion mechanism (32) includes an electric motor (40, 41) as each driving source.

3. The vehicle steering system according to any of Claims 1 and 2, wherein the steering conversion mechanism (32) includes at least one of a variable ratio steering mechanism (32b) adapted to convert an input steering angle to the input shaft (33) caused by the steering handlebar (15) into an output steering angle and transmit it to the front wheel (WF) and a power assist mechanism (32a) adapted to supply a supplementary force to an input operation to the steering handlebar (15).

4. The vehicle steering system according to any of Claims 1 to 3, wherein the housing (31) is made of the same material as that of the motorcycle body frame (2).

## Patentansprüche

1. Motorradlenksystem (30) für ein Motorrad (1) mit einem Vorderrad (WF) und einem Hinterrad (WR), mit:
einem elektrisch betriebenen Lenkumwandlungsmechanismus (32), das angepasst ist, eine Dreheingabe zu einer Eingabewelle (33) in eine Rotations- und/oder Drehkraftmenge umzuwandeln und diese/diese von einer Ausgabewelle (34) auszugeben;
einer Lenkstange (15), die zu der Eingabewelle (33) gekoppelt ist;
einem Stützabschnitt (4a), der zu der Ausgabewelle (34) gekoppelt ist und das Vorderrad (WF) des Motorrads (1) stützt; und
einem Gehäuse (31), das den Lenkumwandlungsmechanismus (32) beherbergt,
wobei der Lenkumwandlungsmechanismus (32) an einem Vorderendabschnitt eines Körperrahmens (2) des Motorrads (1) mit diesem einstückig mittels des Gehäuses (31) montiert ist.

2. Fahrzeuglenksystem nach Anspruch 1, wobei der Lenkumwandlungsmechanismus (32) einen Elektromotor (40, 41) als jeweilige Antriebsquelle umfasst.

3. Fahrzeuglenksystem nach einem der Ansprüche 1 und 2, wobei der Lenkumwandlungsmechanismus (32) mindestens eines von einem Lenkmechanismus (32b) mit variablem Verhältnis, der angepasst ist, einen Eingabelenkwinkel zu der Eingabewelle (33), der mittels der Lenkstange (15) bewirkt wird, in einen Ausgabelenkwinkel umzuwandeln und ihn zu dem Vorderrad (WF) zu übertragen, und einem Kraftassistenzmechanismus (32a) enthält, der angepasst ist, eine Unterstützungskraft zu einer Eingabebedienung zu der Lenkstange (15) zuzuführen.

4. Fahrzeuglenksystem nach einem der Ansprüche 1 bis 3, wobei das Gehäuse (31) aus dem gleichen Material hergestellt ist, wie das des Motorradkörperrahmens (2).

## Revendications

1. Système de direction de motocyclette (30) pour une motocyclette (1) ayant une roue avant (WF) et une roue arrière (WR), comprenant :
un mécanisme de conversion de direction à commande électrique (32) adapté pour convertir une entrée rotative appliquée à un axe d'entrée (33) en un degré de rotation et/ou un couple et pour le(s) délivrer en sortie depuis un axe de sortie (34) ;
un guidon (15) accouplé à l'axe d'entrée (33) ;
une partie de support (4a) accouplée à l'axe de sortie (34) et supportant la roue avant (WF) de la motocyclette (1) ; et
un boîtier (31) contenant le mécanisme de conversion de direction (32),
dans lequel le mécanisme de conversion de direction (32) est monté sur une partie d'extrémité avant d'un cadre (2) de la motocyclette (1) d'un seul tenant avec celui-ci au moyen du boîtier (31).

2. Système de direction de véhicule selon la revendication 1, dans lequel le mécanisme de conversion de direction (32) comprend un moteur électrique (40, 41) en tant que sources d'entraînement distinctes.

3. Système de direction de véhicule selon l'une quelconque des revendications 1 et 2, dans lequel le mécanisme de conversion de direction (32) comprend au moins un mécanisme parmi un mécanisme de direction à taux variable (32b) adapté pour convertir un angle de direction d'entrée appliqué à l'axe d'entrée (33) par l'intermédiaire du guidon (15) en un angle de direction de sortie et pour le transmettre à la roue avant (WF) et un mécanisme de direction assistée (32a) adapté pour fournir une force supplémentaire à une opération d'entrée appliquée au guidon (15).

4. Système de direction de véhicule selon l'une quelconque des revendications 1 à 3, dans lequel le boîtier (31) est fait du même matériau que celui du cadre de motocyclette (2).
